# EUROPEAN PATENT SPECIFICATION

(11) **EP 2 243 700 B1**
(45) Date of publication and mention of the grant of the patent: **19.06.2013**
(21) Application number: 10161060.8
(22) Date of filing: 26.04.2010
(51) Int. Cl.: B63H 23/24, B63H 25/42, B63H 25/46, B63H 21/17, B63H 21/22

(54) **Redundant thruster system**
Redundantes Antriebssystem
Système de propulseur redondant

(30) Priority: 24.04.2009 NO 20091640
(43) Date of publication of application: 27.10.2010
(73) Proprietor: Rolls-Royce Marine AS, 6067 Ulsteinvik (NO)
(72) Inventor: Kleppe, Robert, 6092 Eggebønes (NO)
(74) Representative: Hilden, Børge André

(56) References cited:
- EP-A2- 1 498 997
- WO-A1-02/058206
- WO-A2-02/24523
- WO-A2-2005/049418

## Description

The present invention generally relates to dynamic positioning of vessels. More specifically it relates to a redundant thruster system. Concretely it relates to a thruster system as defined in the independent claim 1.

Document WO 2005/049 418 constitutes the closest prior art.

### Background of the invention

A dynamic positioning vessel is a vessel that has the ability to automatically keep its position and heading, based on input from one or several reference systems. The measured position and heading is compared to the wanted position and heading, thrust orders are applied to the thrusters to compensate for the drift and rotation of the vessel caused by wind, waves and current. The maximum environmental force the vessel is able to withstand, depends on the total thrust (in various directions) the thrusters are able to create. DP operations are divided into classes according to potential consequences caused by a drift off , and redundancy requirements are included accordingly.

Among the important characteristics of dynamic positioning vessels are the position keeping capacity under different environmental conditions and the robustness of the system. A robust system with high availability of position keeping capacity gives advantages both related to security and economy.

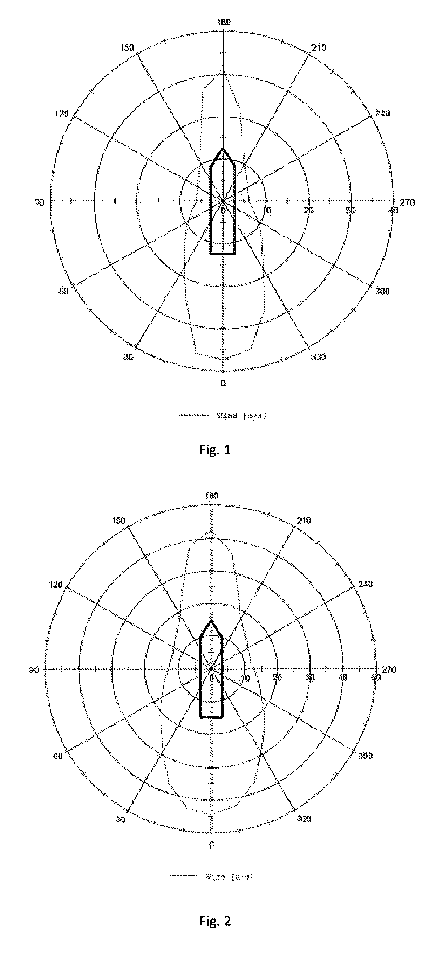

It is known in the area to provide systems with additional thrusters to increase availability. In a traditional three thruster solution, the most significant failure will result in a loss of two of the three thrusters. The definition of the most significant failure, being the single failure within the vessel that has the most negative impact on the vessels ability to keep its position. The position keeping capacity of the remaining thruster will be the dimensioning criteria for the DP max. capability (see figure 1).

In the document "Maritime Electrical Installations and Diesel Electric Propulsion", 22. April 2003, A. K. Adnanes presents redundant propulsion system for a dynamic position vessel. A system comprising three thrusters (two bow propellers and one azimuth), in addition to the main propellers (two azipods), is presented. The thrusters are coupled to a main switch board which is divided in two halves. The system comprises transformers and a frequency transformer with rectifiers.

There are problems with known systems related to capacity, accuracy, security, availability, economy and complexity. If for example a fourth thruster system is added to a three thruster solution in order to make the system more robust in the sense that at least two thruster should be available in the case of most significant failure, this will significantly increase the cost and the complexity of the system. An extra thruster may have negative consequences for weight, size and more.

### Summary of the invention

An aspect of the present invention is a thruster configuration adapted to be used in a vessel comprising e.g. three thruster units of similar size that according to statutory (IMO) and Class requirements can be considered equivalent to four independent units. The concept is applicable for any number of thrusters >2 configured in a group to create transversal thrust in a redundant DP configuration.

A further aspect of the present invention is a solution based on redundant power supply to the thruster and its auxiliary systems. All mechanical components and systems other than electrical for this 3^{rd} thruster are independent of the two other thruster systems (PS/SB) on the vessel, thus it is only electrical supplies that have to be duplicated. The thruster unit itself with its inverter, prime mover, mechanical transmission and dedicated auxiliary systems are not required to be redundant. Dual pumps may however be included for increased availability for the thruster unit.

A still further aspect of the present invention relates to an arrangement for a dual system vessel, giving three way redundancy. An object is to at least double available sideways thrust at the most significant single failure, compared to a traditional solution with three thrusters. The present system is a "online" redundant power supply/distribution system.

The power supply system may comprise a combination of a frequency converter with duplicated rectifier, one power supply from each switchboard halves, one or more isolating transformers as required and redundant power supplies for required auxiliaries.

A general object of the present invention is to solve problems with solution according to prior art.

More specifically, objects of the invention are to provide dynamic positioning vessels with improved characteristics such as availability, security and economy. Advantages of the present solution are illustrated in figures 1-3 where each of the 3 diagrams is showing maximum dynamic positioning, DP, capability at most significant failure. The wind curve represent a combination of wind, waves and current, i.e. to each wind speed a corresponding wave height and a wind induced current is defined, and included.

In a traditional three thruster solution, the most significant failure will result in a loss of two of the three thrusters. The position keeping capacity of the remaining thruster will be the dimensioning criteria for the DP maximum capability (figure 1).

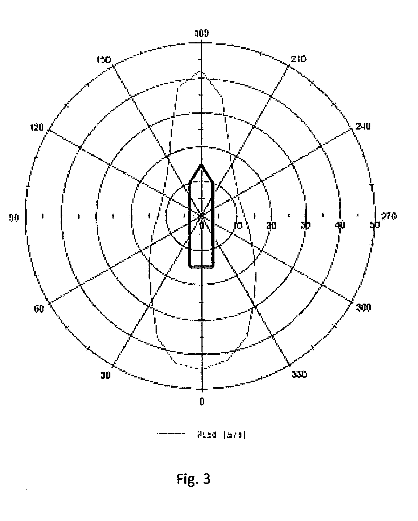

With the new concept the most significant failure will result in loss of only one of the three thrusters. The DP capability (figure 2) will be almost identical to a solution with four traditional thruster units installed (figure 3).

A major advantage of the of the present invention is that in a DP operation, a three thruster installation with the redundant solution is comparable to a traditional four thruster installation, but with less installed components and less investment cost.

A further advantage is that the redundant solution will be immediately ("online") available in the most significant single failure case implying also that no manual operations are required.

By utilizing various well known and commonly used technologies, subsystems and equipment, combining these into a thruster system for use in within a vessel, a thruster according to described solution will be deemed redundant with regards to most significant failure for the vessel.

### Brief description of the figures

Figure 1 shows maximum DP capability at most significant failure for a traditional 3 thruster solution.
Figure 2 shows maximum DP capability at most significant failure for a solution according to the present invention.
Figure 3 shows maximum DP capability at most significant failure for a traditional 4 thruster solution.
Figure 4 shows a redundant thruster system.
Figure 5 shows a redundant thruster system based on single auxiliary pumps.
Figure 6 shows a redundant thruster system based on dual auxiliary pumps.
Figure 7 shows main switchboard and power distribution system.
Figure 8 shows power transformers.
Figure 9 shows input modules/sections frequency converter.
Figure 10 is presenting a detailed example of a cooling system.
Figure 11 presents a part of the redundant power system with focus on UPS.
Figure 12 schematically presents a thruster room layout.

### Detailed description of the invention

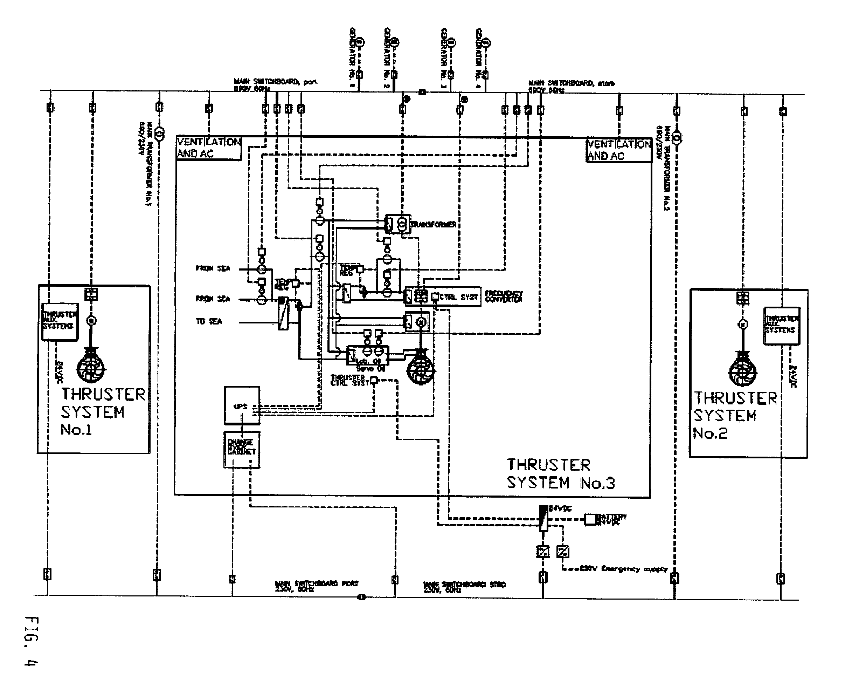

Figure 4 presents a redundant thruster system according to the invention. This embodiment comprises three thruster systems, Thruster System No. 1-3. The three thruster systems are coupled to a main switch board system for providing main power. The switch board system is divided in two parts by a bus-tie; the main switchboard, port, and the main switchboard, starboard. On both sides of the switchboard, both 230VAC and 690VAC are provided.

Thruster System No. 1 is coupled only to the port side of the main switch board, while Thruster System No. 2 is coupled only to the starboard side. This solution is well-known in the area.

Thruster System No. 3, however, is fed by outgoing feeders from each side of the bus-tie, and the description will now focus on the solutions for this thruster system.

The thruster system comprises a number of auxiliary systems like cooling water system, servo system, lubricating system and ventilation systems. A redundant distribution system for supply of 690VAC to the auxiliary systems is provided; the auxiliary systems being fed from both sides of the switchboard.

Alternatively to the redundant distribution solution described above, a dedicated UPS or multidrive system, with two power supplies or a system with two power supplies with automatic changeover, and enough battery capacity to maintain service while power supply is changed from one supply to the other. This will be detailed below. Similar to the distribution system described above, a redundant distribution system for 230VAC (i.e. power supply for control systems and auxiliary systems). Also here, alternatively a dedicated UPS system with two power supplies with automatic changeover, and enough battery capacity to maintain service while power supply is changed from one supply to the other, may be provided.

For the thruster control system and the control system of the frequency converter, a separate 24VDC system with the charger connected to the redundant 230V system, is provided.

A transformer solution is provided, which is adapted to upstream voltage level and downstream rectifier technology. Examples related to this are provided below.

The system further comprises a frequency converter with a control system, controls the rpm of the electric motor, and thus the propeller rpm. The converter comprises two power input sections/modules, each dimensioned according to 50%-100% power takeout from the output section/module.

The output module/ section frequency converter will be dimensioned according to the power of the electrical motor driving the input shaft to the thruster, and can be based on any converter technology available.

Related to the frequency converter control system, a standard control system may be utilized for controlling the drive, however with one significant addition. The power supply to the control system must be redundant. i.e. no single failure in power supply shall render the system out of service.

A thruster unit (mechanical part of a tunnel thruster or azimuth thruster) is a central part of the system. The electrical drive motor for the thruster unit is a normal motor for this kind of operation, and there should be nothing special requirement related to this item. However, if it has a separate electrical cooling fan, redundant power supply to this is a requirement.

Where duty/standby is mentioned in this specification, this refers to two pumps serving one system. The duty/standby pumps are both running at reduced speed/ capacity in normal operation, and if a failure occurs the pump with no failure will run up to its full capacity.

Related to the thruster unit, redundant auxiliary systems related to e.g. servo oil, lubricating oil, are required. Each system to have two hydraulic pumps (duty/standby), one fed from each side of the bus-tie in the main switchboard. Alternatively a UPS or multidrive system, with two power supplies or a switching system on the supply side (i.e. switching between two supplies) may be utilized to power a single pump for each of these auxiliaries. If the control system for the LO system is dependent of electrical power, this must be redundant. i.e. no single failure in power supply shall render the system out of service.

If the control system for the power pack is dependent of electrical power, this must be redundant. i.e. no single failure in power supply shall render the system out of service.

The third thruster system further comprises a seawater cooling system that is independent of the two main seawater cooling systems. This system is to have two seawater pumps (duty/standby), one supplied from each side of the bus-tie in the main switchboard. Again, alternatively, a UPS or multidrive system, with two power supplies or a system with a switching system on the supply side (i.e. switching between two supplies) may be utilized to power a single pump.

Required number of freshwater cooling system/systems that is/are independent of the two main freshwater cooling systems are dependent of type/ maker of each piece of equipment in the thruster system. These systems/ sub-systems are each to have two freshwater pumps, one supplied from each side of the bus-tie in the main switchboard. Also here, a UPS or multidrive system, with two power supplies or a system with a switching system on the supply side (i.e. switching between two supplies) may alternatively be utilized to power a single pump for each of these auxiliaries.

Air cooling to the thruster room is provided. Two units, each with the required capacity to cool the room. These may run at reduced speed when both are running. Redundant power supply may be omitted if the interruption of this function does not have short time consequences.

Interfaces to/from this thruster and the DP system must be independent of the PS and SB systems interfaces, thus a 3^{rd} interface controller in the DP system is required.

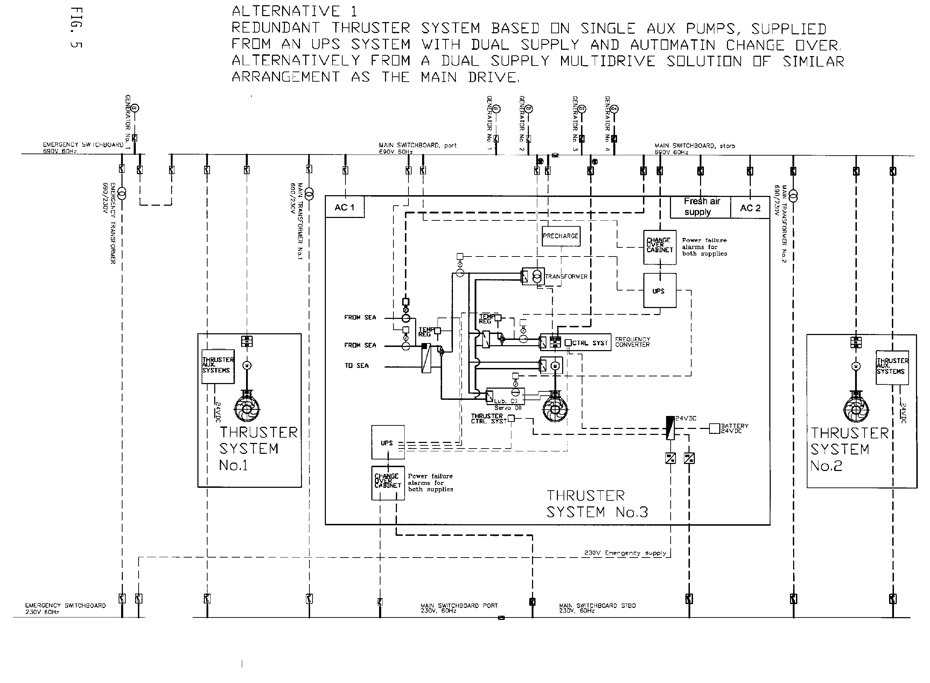

Figure 5 (alternative 1) presents an embodiment of the present invention mainly corresponding to the embodiment presented in figure 4, but where the redundant thruster system is based on single auxiliary pumps supplied from an Uninterruptable Power System (UPS) system with dual supply and automatic change over. The automatic change over between the two sides of the main switchboard, is provided by a change over cabinet.

Alternatively the single pumps may be supplied from a dual supply multidrive solution of similar arrangement as the main drive.

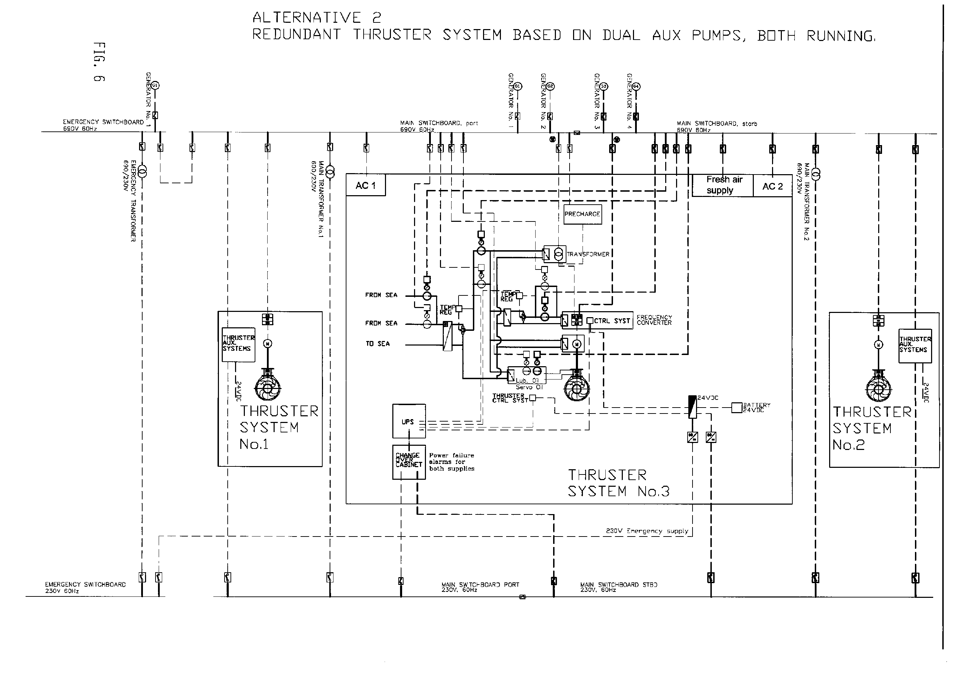

Figure 6 also presents an embodiment of the present invention mainly corresponding to the embodiment presented in figure 4, but where the redundant thruster system is based on dual auxiliary pumps where one of the pumps for each set of the dual pumps, is supplied from one side of the main switchboard, and the other pump from the other side.

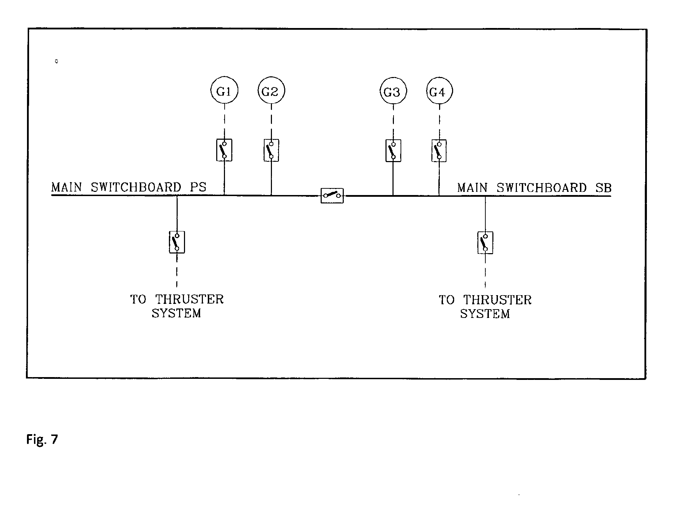

Figure 7 presents examples of electrical system(s) which must be redundant for all power systems required by the thruster system i.e. all voltage levels and types of systems (e.g. 690,440,230 VAC and 24VDC). It must be possible to electrically divide the main switchboard and the power distribution systems into at least two "islands" (electrically isolated from each other, normally PS/SB), alternatively independent systems may be used. The key issue is that no single failure in the thruster system shall affect more than one of the upstream systems, preferably none. The concept is independent of voltage levels, this can be arranged for any voltage level approved by the class.

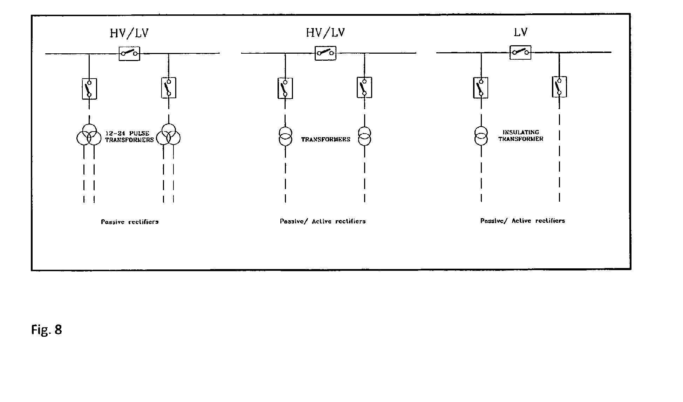

Figure 8, illustrates that at least one power transformer must be included in the system, but dependent of upstream voltage level and downstream rectifier technology, various types and number may be utilized. The concept is independent of type and number of transformer(s), but must be adapted to upstream voltage level and downstream rectifier technology. However at least one transformer to be installed for galvanic insulation between the two switchboard halves.

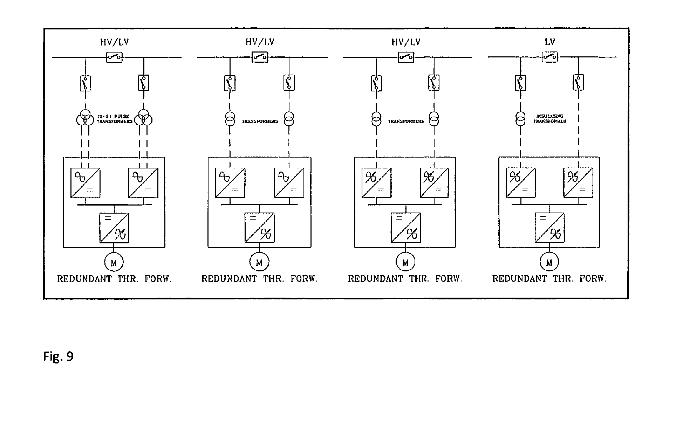

Figure 9 illustrates that input modules for the frequency converter must be dimensioned according to 2 x 50-100% of the power output to the electrical motor. Both passive- and active rectifiers may be utilized in the concept. With active rectifiers it will be possible control the load sharing, with passive rectifiers the load sharing will be dependent of the voltage level and the phase of the supply voltages. Thus the input section with passive rectifiers must be dimensioned for 2x100% of the output section.

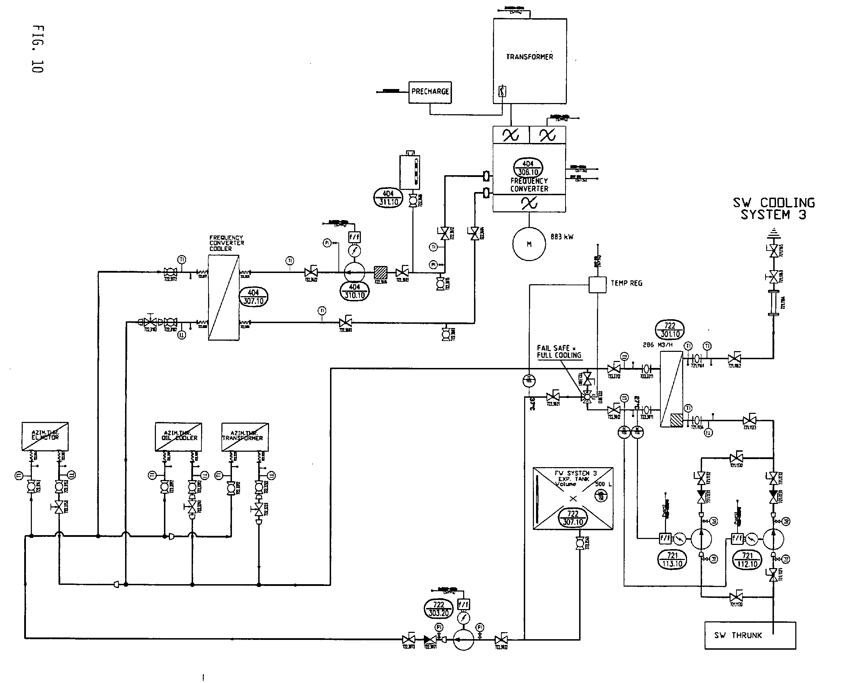

Figure 10 presents a block diagram of a cooling water system. The Sea Water cooling system for the thruster system must be independent of the two main SW cooling systems PS/SB. It must have two SW pumps (duty/standby) one fed from each side of the bus-tie in the main switchboard. Alternatively a UPS or multidrive system, with two power supplies or a system with a switching system on the supply side (i.e. switching between two supplies) may be utilized to power a single pump for each of these auxiliaries.

Each Fresh Water cooling system in the thruster system must be independent of the two main FW cooling systems PS/SB. It must have two FW pumps (duty/ standby) one fed from each side of the bus-tie in the main switchboard. Where additional FW pumps are required within the system, it must be two FW pumps (duty/ standby) one fed from each side of the bus-tie in the main switchboard. Alternatively a UPS or multidrive system, with two power supplies or a system with a switching system on the supply side (i.e. switching between two supplies) may be utilized to power a single pump for each of these auxiliaries.

If the temperature controlling device is dependent of electrical power, this must be redundant. i.e. no single failure in power supply shall render the system out of service.

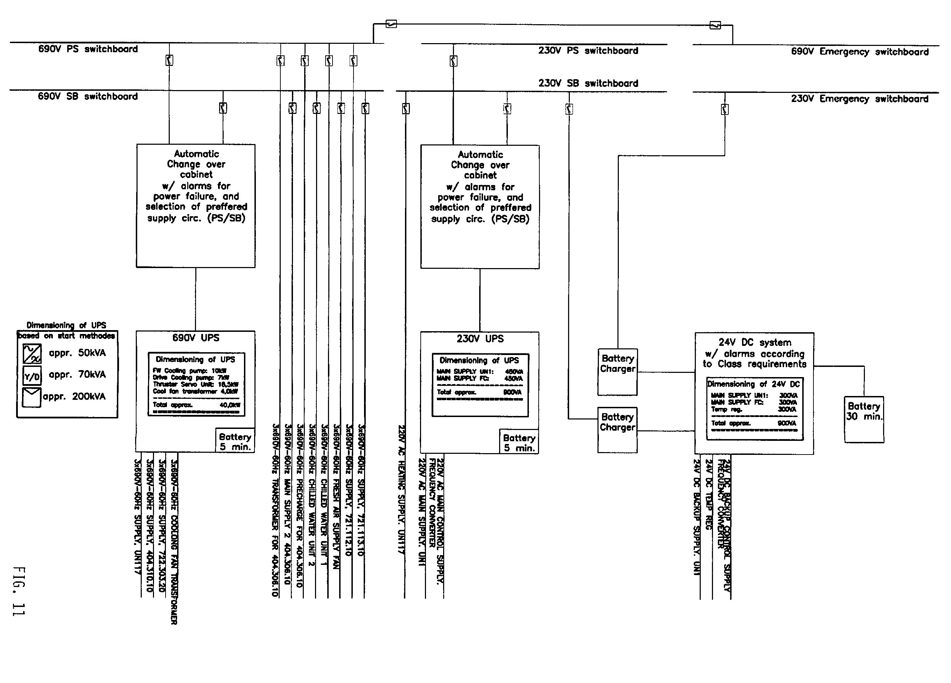

Figure 11 presents a power distribution system for a redundant thruster unit. The power distribution system comprises two UPS system; one for 230V and one for 690 V. The two UPS systems are each connected to the two sides of the switchboard by an automatic changeover cabinet with alarms for power failure and selections of supply circuit. Also a 24V DC system is presented with alarms according to class requirements, the DC system coupled to two battery chargers and a battery.

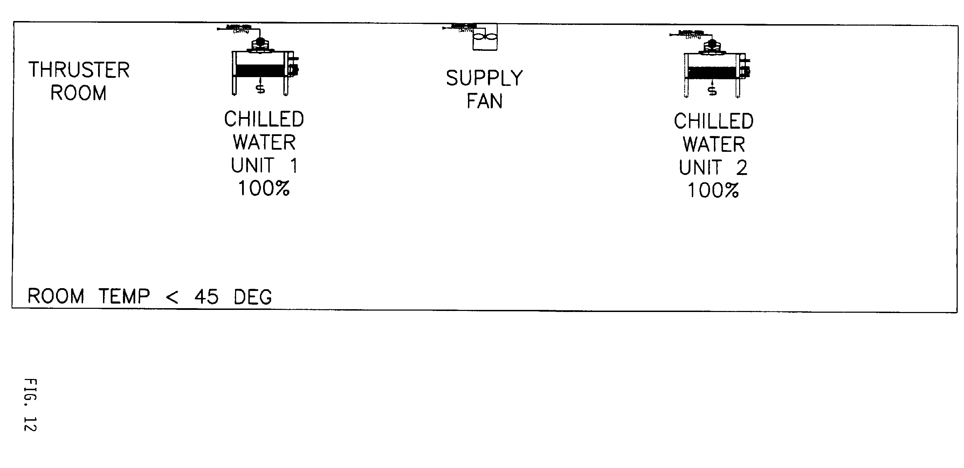

Figure 12 schematically presents a thruster room. Room/ rooms where parts of this thruster solution is situated, must have a redundant air cooling system and a fresh air supply.

The thruster control system (remote control system) must have redundancy in the power supply. i.e. no single failure in power supply shall render the system out of service.

### ABBREVIATIONS

- DP:: Dynamic positioning, a control system which in combination with propulsion system design making the vessel comply with certain rules for redundancy in position keeping capabilities
- DPI:: DP system without redundancy requirements
- DPII:: DP system with redundancy in technical design
- DPIII:: DP system with redundancy in technical design and physical separation
- DP max. capability:: Curve showing maximum environmental forces from various directions where the vessel is able to keep in position.
- IMO:: International Maritime Organization
- Class:: Class society i.e. Det Norske Veritas, Lloyds, American Bureau of Shipping etc.

## Claims

1. Redundant thruster system for dynamic positioning of a vessel, comprising at least three thrusters to create transversal thrust, connected to a switchboard for main power supply, said switchboard being divided into two parts by a bus-tie with electrically isolated power distribution systems, wherein said at least two parts of the switchboard are normally active, and each part is arranged to supply at least two thrusters, wherein at least one of the thrusters; namely the redundant thruster, is connected to the two parts of the main switchboard, giving a dual power system vessel and a three way thruster redundancy.

2. Redundant thruster system according to claim 1, wherein the power distribution system of the redundant thruster comprises a combination of a frequency converter with duplicated rectifier, a power supply from each part of the switchboard, at least one isolating transformer and redundancy in power supplies for all auxiliary systems.

3. Redundant thruster system according to one of the claims above, wherein a first and a third thruster are connected to the first part of the main switchboard, and a second and a third thruster are connected to the second part of the main switchboard.

4. Redundant thruster system according to one of the claims above, comprising a redundant distribution system for supply of main power to one or more of the auxiliary systems, where at least one of the auxiliary systems is being fed from two different parts of the switchboard.

5. Redundant thruster system according to one of the claims above, comprising a redundant distribution system for supply of main power to one or more of the auxiliary systems, where at least one of the auxiliary systems is being fed from a dedicated uninterruptible power supply, UPS, with two power supplies or a system with two power supplies with automatic changeover.

6. Redundant thruster system according to one of the claims 2 to 5, comprising a control system for the frequency converter, where the power supply to said control system is redundant for all systems for thruster 3; the redundant thruster.

7. Redundant thruster system according to one of the claims above, comprising a thruster control system and a control system for the frequency converter, where said control systems are fed from a separate 24VDC system with a charger connected to the redundant power supply system.

8. Redundant thruster system according to one of the claims above, where the redundant thruster system comprises a thruster unit with two hydraulic pump units (duty/standby), where the two pumps are fed from different sides of the switchboard.

9. Redundant thruster system according to one of the claims above, where the redundant thruster system comprises a thruster unit with a hydraulic pump unit, where the pump is being fed from a dedicated uninterruptible power supply, UPS, with two power supplies or a system with two power supplies with automatic changeover.

10. Redundant thruster system according to one of the claims above, where the redundant thruster system comprises one or more water cooling systems of seawater and/or freshwater type, and where each cooling system comprises two cooling pumps (duty/standby), where the two pumps are fed from different sides of the switchboard.

11. Redundant thruster system according to one of the claims above, where the redundant thruster system comprises one or more water cooling systems of seawater and/or freshwater type, and where each cooling system comprises one cooling pump, where the pump is being fed from a dedicated uninterruptible power supply, UPS, with two power supplies or a system with two power supplies with automatic changeover.

12. Redundant thruster system according to one of the claims above, where the redundant thruster system comprises one or more single auxiliary pumps supplied from
- UPS with dual supply and automatic changeover, or
- dual supply multidrive solution of similar arrangement as main drive.

13. Redundant thruster system according to one of the claims above, where the redundant thruster system comprises dual auxiliary pumps where one of the pumps for each set of dual pumps, is supplied from one side of the main switchboard, and the other pump from the other side.

14. Redundant thruster system according to one of the claims above, where the redundant thruster system comprises a temperature controlling device fed from a redundant power supply.

## Patentansprüche

1. Redundante Strahlrudersystem für die dynamische Positionierung eines Schiffes, umfassend wenigstens drei Strahlruder zur Erzeugung von Transversalschub, die mit einer Schaltanlage für die Hauptstromversorgung verbunden sind, wobei die Schaltanlage durch eine Sammelschienenkupplung in zwei Teile mit elektrisch isolierten Leistungsverteilungssystemen aufgeteilt ist, wobei die wenigstens zwei Teile der Schaltanlage normalerweise aktiv sind, und jeder Teil ausgestaltet ist wenigstens zwei Strahlruder zu versorgen, wobei wenigstens eines der Strahlruder, namentlich das redundante Strahlruder, mit den zwei Teilen der Hauptschaltanlage verbunden ist, wodurch ein Schiff mit dualem Stromversorgungssystem und einer dreifachen Strahlruderredundanz gegeben ist.

2. Redundantes Strahlrudersystem gemäß Anspruch 1, wobei das Leistungsversorgungssystem des redundanten Strahlruders eine Kombination eines Frequenzumrichters mit doppeltem Gleichrichter, einer Stromversorgung von jedem Teil der Schaltanlage, wenigstens einem Trenntransformator und Redundanz in der Stromversorgung für alle Hilfssysteme umfasst.

3. Redundantes Strahlrudersystem nach einem der obigen Ansprüche, wobei ein erstes und ein drittes Strahlruder mit dem ersten Teil der Hauptschaltanlage verbunden sind, und ein zweites und ein drittes Strahlruder mit dem zweiten Teil der Hauptschaltanlage verbunden sind.

4. Redundantes Strahlrudersystem nach einem der obigen Ansprüche, umfassend ein redundantes Verteilersystem für die Hauptstromversorgung von einem oder mehreren Hilfssystemen, wobei wenigstens eines der Hilfssysteme von zwei unterschiedlichen Teilen der Schaltanlage gespeist wird.

5. Redundantes Strahlrudersystem nach einem der obigen Ansprüche, umfassend ein redundantes Verteilersystem für die Hauptstromversorgung von einem oder mehreren Hilfssystemen, wobei wenigstens eines der Hilfssysteme durch eine zugehörige unterbrechungsfreie Stromversorgung, UPS, mit zwei Stromversorgungen oder einem System mit zwei Stromversorgungen und automatischem Wechsler gespeist wird.

6. Redundantes Strahlrudersystem nach einem der Ansprüche 2 bis 5, umfassend ein Steuerungssystem für den Frequenzumrichter, wobei die Stromversorgung für das Steuerungssystem redundant ist für alle Systeme des Strahlruders 3, dem redundanten Strahlruder.

7. Redundantes Strahlrudersystem nach einem der obigen Ansprüche, umfassend ein Strahlrudersteuerungssystem und ein Steuerungssystem für den Frequenzumrichter, wobei die genannten Steuerungssysteme durch ein separates 24-Volt-Gleichstromsystem mit einem Ladegerät, der an das redundante Stromversorgungssystem angeschlossen ist, gespeist werden.

8. Redundantes Strahlrudersystem nach einem der obigen Ansprüche, wobei das redundant Strahlrudersystem eine Strahlrudereinheit mit zwei Hydraulikpumpeneinheiten (Wechselbetrieb) umfasst, wobei die beiden Pumpen von unterschiedlichen Seiten der Schaltanlage gespeist werden.

9. Redundantes Strahlrudersystem nach einem der obigen Ansprüche, wobei das redundante Strahlrudersystem eine Strahlrudereinheit mit einer Hydraulikpumpeninheit umfasst, wobei die Pumpe durch eine zugehörige unterbrechungsfreie Stromversorgung, UPS, mit zwei Stromversorgungen oder einem System mit zwei Stromversorgungen und automatischem Wechsler gespeist wird.

10. Redundantes Strahlrudersystem nach einem der obigen Ansprüche, wobei das redundante Strahlrudersystem ein oder mehrere Wasserkühlsysteme gemäß dem Meerwasser- und/oder Frischwassertyp umfasst, wobei jedes Kühlsystem zwei Kühlpumpen (Wechselbetrieb) umfasst, wobei die beiden Pumpen von unterschiedlichen Seiten der Schaltanlage gespeist werden.

11. Redundantes Strahlrudersystem nach einem der obigen Ansprüche, wobei das redundante Strahlrudersystem ein oder mehrere Wasserkühlsysteme gemäß dem Meerwasser- und/oder Frischwassertyp umfasst, wobei jedes Kühlsystem eine Kühlpumpe umfasst, wobei die Pumpe durch eine zugehörige unterbrechungsfreie Stromversorgung, UPS, mit zwei Stromversorgungen oder einem System mit zwei Stromversorgungen und automatischem Wechsler gespeist wird.

12. Redundantes Strahlrudersystem nach einem der obigen Ansprüche, wobei das redundante Strahlrudersystem eine oder mehrere Hilfspumpen umfasst, die gespeist werden durch
- eine UPS mit zwei Stromversorgungen und automatischem Wechsler, oder
- eine Dualversorgungs-Multidrive-Lösung mit einem vergleichbaren Aufbau wie beim Hauptantrieb.

13. Redundantes Strahlrudersystem nach einem der obigen Ansprüche, wobei das redundante Strahlrudersystem doppelte Hilfspumpen aufweist, wobei eine der Pumpen jedes Satzes von doppelten Pumpen von einer Seite der Hauptschaltanlage versorgt wird, und die andere Pumpe von der anderen Seite.

14. Redundantes Strahlrudersystem nach einem der obigen Ansprüche, wobei das redundante Strahlrudersystem ein Temperatursteuerungsgerät umfasst, dass durch eine redundante Stromversorgung gespeist wird.

## Revendications

1. Système à propulseurs redondants pour l'ancrage dynamique d'un navire, comprenant au moins trois propulseurs destinés à créer une poussée transversale, connectés à un tableau de contrôle d'alimentation électrique principale, ledit tableau de contrôle étant divisé en deux parties par un sectionneur de barre d'attache doté de systèmes de distribution d'alimentation électriquement isolés, dans lequel lesdites au moins deux parties du tableau de contrôle sont normalement actives, et chaque partie est agencée de manière à alimenter au moins deux propulseurs, dans lequel au moins l'un des propulseurs, à savoir le propulseur redondant, est connecté aux deux parties du tableau de contrôle principal, offrant un navire à double système d'alimentation et une redondance de propulseurs à trois voies.

2. Système à propulseurs redondants selon la revendication 1, dans lequel le système de distribution d'alimentation du propulseur redondant comprend une combinaison comportant un convertisseur de fréquence avec redresseur double, une alimentation électrique provenant de chaque partie du tableau de contrôle, au moins un transformateur d'isolement et une redondance en alimentations électriques pour tous les systèmes auxiliaires.

3. Système à propulseurs redondants selon l'une quelconque des revendications précédentes, dans lequel un premier propulseur et un troisième propulseur sont connectés à la première partie du tableau de contrôle principal, et un deuxième propulseur et un troisième propulseur sont connectés à la deuxième partie du tableau de contrôle principal.

4. Système à propulseurs redondants selon l'une quelconque des revendications précédentes, comprenant un système de distribution redondant pour la fourniture d'alimentation principale à l'un ou plusieurs des systèmes auxiliaires, où au moins l'un des systèmes auxiliaires est alimenté à partir de deux différentes parties du tableau de contrôle.

5. Système à propulseurs redondants selon l'une quelconque des revendications précédentes, comprenant un système de distribution redondant pour la fourniture d'alimentation principale à un ou plusieurs des systèmes auxiliaires, où au moins l'un des systèmes auxiliaires est alimenté à partir d'un système d'alimentation sans coupure dédié, UPS, doté de deux alimentations électriques ou d'un système doté de deux alimentations électriques avec commutation automatique.

6. Système à propulseurs redondants selon l'une quelconque des revendications 2 à 5, comprenant un système de commande pour le convertisseur de fréquence, où l'alimentation électrique audit système de commande est redondante pour tous les systèmes en ce qui concerne le propulseur n° 3, à savoir le propulseur redondant.

7. Système à propulseurs redondants selon l'une quelconque des revendications précédentes, comprenant un système de commande de propulseur et un système de commande pour le convertisseur de fréquence, où lesdits systèmes de commande sont alimentés à partir d'un système 24 VCC individuel avec un chargeur connecté au système d'alimentation électrique redondant.

8. Système à propulseurs redondants selon l'une quelconque des revendications précédentes, où le système à propulseurs redondants comprend une unité de propulseur dotée de deux unités de pompes hydrauliques (service / veille), où les deux pompes sont alimentées à partir de différents côtés du tableau de contrôle.

9. Système à propulseurs redondants selon l'une quelconque des revendications précédentes, où le système à propulseurs redondants comprend une unité de propulseur dotée d'une unité de pompe hydraulique, où la pompe est alimentée à partir d'un système d'alimentation sans coupure dédié, UPS, doté de deux alimentations électriques, ou d'un système doté de deux alimentations électriques avec commutation automatique.

10. Système à propulseurs redondants selon l'une quelconque des revendications précédentes, où le système à propulseurs redondants comprend un ou plusieurs systèmes de refroidissement d'eau de type eau de mer et/ou eau douce, et dans lequel chaque système de refroidissement comprend deux pompes de refroidissement (service / veille), où les deux pompes sont alimentées à partir de différents côtés du tableau de contrôle.

11. Système à propulseurs redondants selon l'une quelconque des revendications précédentes, où le système à propulseurs redondants comprend un ou plusieurs systèmes de refroidissement d'eau de type eau de mer et/ou eau douce, et où chaque système de refroidissement comprend une pompe de refroidissement, où la pompe est alimentée à partir d'un système d'alimentation sans coupure dédié, UPS, doté de deux alimentations électriques ou, d'un système doté de deux alimentations électriques avec commutation automatique.

12. Système à propulseurs redondants selon l'une quelconque des revendications précédentes, où le système à propulseurs redondants comprend une ou plusieurs pompes auxiliaires uniques alimentées par :
- un système UPS avec double alimentation et commutation automatique ; ou
- une solution d'entrainements multiples à double alimentation dont l'agencement est similaire à celui d'un entraînement principal.

13. Système à propulseurs redondants selon l'une quelconque des revendications précédentes, où le système à propulseurs redondants comprend deux pompes auxiliaires, où l'une des pompes de chaque ensemble de deux pompes est alimentée à partir d'un côté du tableau de contrôle principal, et l'autre la pompe à partir de l'autre côté.

14. Système à propulseurs redondants selon l'une quelconque des revendications précédentes, où le système à propulseurs redondants comprend un dispositif de commande de température alimenté à partir d'une alimentation électrique redondante.
